# EUROPÄISCHE PATENTSCHRIFT

(11) **EP 2 513 502 B1**
(45) Veröffentlichungstag und Bekanntmachung des Hinweises auf die Patenterteilung: **30.04.2014**
(21) Anmeldenummer: 10754878.6
(22) Anmeldetag: 14.09.2010
(51) Int. Cl.: F16C 19/54, F16C 25/06, F16H 57/02, F16C 35/063, F16C 25/08

(54) **LAGERUNGSEINRICHTUNG FÜR EINEN ANTRIEBSSTRANG EINES KRAFTWAGENS**
MOUNTING DEVICE FOR A DRIVE TRAIN OF A MOTOR VEHICLE
SYSTÈME DE PALIERS POUR UNE CHAÎNE CINÉMATIQUE D'UNE AUTOMOBILE

(30) Priorität: 17.12.2009 DE 102009058560
(43) Veröffentlichungstag der Anmeldung: 24.10.2012
(73) Patentinhaber: Daimler AG, 70327 Stuttgart (DE)
(72) Erfinder: CLAUS, Matthias, 73113 Ottenbach (DE); AZIZ, Mohd, Azwan, 20400 Kuala Terengganu (MY)
(74) Vertreter: JENSEN & SON
(86) Internationale Anmeldenummer: PCT/EP2010/005637
(87) Internationale Veröffentlichungsnummer: WO 2011/072760

(56) Entgegenhaltungen:
- DE-A1-102005 027 082
- US-A- 1 880 660

## Beschreibung

Die Erfindung betrifft eine Lagerungseinrichtung für einen Antriebsstrang eines Kraftwagens, insbesondere eines Nutzkraftwagens, der im Oberbegriff des Patentanspruchs 1 angegebenen Art.

Die DE 10 2005 027 082 A1 offenbart eine Lagerungsvorrichtung für Kraftfahrzeuge, mit zwei Wälzlagern, deren Außenringe in einem Gehäuse und deren Innenringe auf einer Welle angeordnet sind und einer Spannvorrichtung zum axialen Verspannen der Außenringe gegenüber den Innenringen. Die Spannvorrichtung umfasst dabei ein Zwischenelement, das eine Veränderung der axialen Vorspannung der Wälzlager durch lastabhängige Veränderung seiner Dickenabmessung ermöglicht. Das Zwischenelement ist beispielsweise als ein elektrisch ansteuerbares Piezoelement ausgeführt.

Derartige Aktuatoren sowie anderweitige, beispielsweise mechanische oder hydraulische Stellglieder, benötigen eine Regelung sowie Hilfsenergien, was die Komplexität und damit die Kosten unerwünschterweise ansteigen lässt.

Es ist daher Aufgabe der vorliegenden Erfindung, eine Lagerungseinrichtung der eingangs genannten Art bereitzustellen, welche eine geringe Komplexität und geringe Kosten aufweist.

Diese Aufgabe wird durch eine Lagerungseinrichtung für einen Antriebsstrang eines Kraftwagens, insbesondere eines Nutzkraftwagens, mit den Merkmalen des Patentanspruchs 1 gelöst. Vorteilhafte Ausgestaltungen mit zweckmäßigen und nichttrivialen Weiterbildungen der Erfindung sind in den abhängigen Ansprüchen angegeben.

Eine erfindungsgemäße Lagerungseinrichtung für einen Antriebsstrang eines Kraftwagens, mit zumindest einer Welle, mit einem mit der Welle drehfest verbundenen Antriebsteil, mit zumindest einem Lagerring der Welle und mit einer Verspanneinrichtung zur Beaufschlagung des Lagerrings in axialer Richtung der Welle mit einer Kraft, zeichnet sich dadurch aus, dass der Lagerring der Welle mittels der Verspanneinrichtung in Folge einer relativen Verdrehung des Antriebsteils zu dem Lagerring mit der Kraft in axialer Richtung der Welle beaufschlagbar ist, wobei der Lagerring zumindest bereichsweise auf der Welle angeordnet und drehfest mit dieser verbunden ist.

Die Welle der erfindungsgemäßen Lagerungseinrichtung ist dabei von dem Antriebsteil antreibbar. In Abhängigkeit eines von dem Antriebsteil auf die Welle eingeleiteten Drehmoments erfolgt eine Verdrehung eines Bereichs der Welle, über welchen dieses Drehmoment in die Welle eingeleitet wird relativ zu einem in Richtung dieses Momentenflusses stromab angeordneten Bereichs der Welle, in welchem der Lagerring der Welle, der beispielsweise mit der Welle drehfest verbunden ist, angeordnet ist. Mit anderen Worten bedeutet dies, dass sich ein Schaft der Welle in Abhängigkeit von dem Betrag des über das Antriebsteil in die Welle eingeleiteten Drehmoments verdreht, also tordiert. Weiterhin bedeutet dies, dass daraus eine relative Verdrehung des Antriebsteils zu dem Lagerring der Welle resultiert, und zwar ebenso in Abhängigkeit von dem Betrag des eingeleiteten Drehmoments. Mittels der Verspanneinrichtung ist nun in Folge dieser relativen Verdrehung des Antriebsteils zu dem Lagerring der Lagerring mit der Kraft in axialer Richtung beaufschlagbar, wodurch eine axiale Vorspannung eines Lagers, welches den besagten Lagerring umfasst, in Abhängigkeit von dem Betrag des anliegenden und in die Welle eingeleiteten Drehmoments ermöglicht ist.

Das besagte Lager umfasst zum Beispiel nicht nur den besagten Lagerring, der beispielsweise als drehfest mit der Welle verbundener Lagerinnenring ausgebildet ist, sondern auch einen korrespondierenden Lageraußenring, wobei der Lagerinnenring und der Lageraußenring unter Vermittlung von Lagerkörpern, insbesondere Wälzkörpern wie beispielsweise Kegelrollen, gegeneinander abgestützt sind. In Folge der Beaufschlagung des Lagerrings in Form des Lagerinnenrings ist somit der Lagerinnenring gegenüber dem Lageraußenring verspannbar, wodurch eine axiale Vorspannung des Lagers in Abhängigkeit von dem Betrag des eingeleiteten Drehmoments realisiert ist.

Die so dargestellte Verspanneinrichtung der erfindungsgemäßen Lagerungseinrichtung benötigt somit keine zu regelnden und Energie verbrauchenden Stellglieder. Daher weist die erfindungsgemäße Lagerungseinrichtung nicht nur eine geringe Komplexität, eine geringe Teileanzahl und damit einhergehende, niedrige Kosten sondern auch ein niedriges Gewicht auf, was dem Energieverbrauch des Kraftwagens zum Betrieb desselbigen zugute kommt. Des Weiteren ist die Ausfallwahrscheinlichkeit der erfindungsgemäße Lagerungseinrichtung als äußerst niedrig einzustufen aufgrund der geringen Komplexität.

Die beschriebene, relative Verdrehung der Bereiche der Welle erfolgt dabei infolge von Elastizitäten der Welle beziehungsweise ihres Wellenschafts, wobei dieser Effekt zur Darstellung der vorteilhaften axialen Vorspannung des Lagers genutzt wird.

Diese drehmomentabhängige Lagervorspannung reduziert die Verlustleistung des Lagers insbesondere in niedrigen und mittleren Drehmomentbereichen, woraus eine weitere Reduzierung des Energiebedarfs zum Betrieb des Kraftwagens resultiert. Ist beispielsweise ein Antriebsaggregat zum Antreiben des Kraftwagens als Verbrennungskraftmaschine ausgebildet, so bedeutet dies eine deutliche Kraftstoffreduzierung sowie eine Reduzierung der CO₂-Emissionen. Im Vergleich zu bekannten Lagerungseinrichtungen ist dabei eine Reduzierung von Lagerverlustleistungen um bis zu 30% möglich, was den Wirkungsgrad der Lagerungseinrichtung verbessert.

Neben der Tatsache, dass keine zusätzliche Sensoren und/oder Steuergeräte notwendig sind, birgt die erfindungsgemäße Lagerungseinrichtung den Vorteil, dass sie einen nur geringen Bauraumbedarf aufweist sowie eine nur minimale Änderung bereits vorhandener Bauteile erfordert und somit quasi in bereits vorhandene Bauteile nahezu ohne zeit- und kostenaufwändigen Änderungsaufwand integriert werden kann. Des Weiteren ist eine Nachrüstung bereits vorhandener Systeme mit der erfindungsgemäßen Lagerungseinrichtung möglich.

Bei einer vorteilhaften Ausführungsform der Erfindung weist die Verspanneinrichtung wenigstens ein dem Antriebsteil zugeordnetes und zumindest bereichsweise im Wesentlichen rampenförmiges Steuerteil sowie wenigstens ein korrespondierendes, dem Lagerelement zugeordnetes und zumindest bereichsweise im Wesentlichen rampenförmiges Betätigungsteil auf, wobei das Steuerteil und das Betätigungsteil unter Vermittlung zumindest eines Vermittlungsteils, insbesondere eines Wälzkörpers, zusammen wirken. Vorteilhafterweise ist das Antriebsteil mit dem Steuerteil sowie der Lagerring mit dem Betätigungsteil einstückig ausgebildet, was die Teileanzahl und damit die Kosten der Lagerungseinrichtung in einem geringen Rahmen hält. Die jeweilige Rampenform ist dabei beispielsweise zumindest im Wesentlichen parallel zur radialen Richtung ausgebildet. In jeglicher Hinsicht ist somit die relative Verdrehung der Welle beziehungsweise der Bereiche der Welle und damit die relative Verdrehung des Antriebsteils zu dem Lagerring durch das Steuerteil und das Betätigungsteil umsetzbar in eine axiale Kraftbeaufschlagung des Lagerrings der Welle und damit in eine axiale Bewegung desselbigen, wodurch die drehmomentabhängige und damit bedarfsgerechte Lagervorspannung realisiert ist. Der Wälzkörper, unter dessen Vermittlung das Steuerteil sowie das Betätigungsteil zusammenwirken, ist beispielsweise als Zylinderrolle ausgebildet, wodurch hohe, axiale Kräfte übertragbar sind.

An dieser Stelle sei angemerkt, dass die Welle beispielsweise mittels zumindest zweier Lager gelagert ist, die beide einen beschriebenen, drehfest mit der Welle verbundenen Lagerinnenring sowie einen korrespondierenden Lageraußenring umfassen, wobei der Lageraußenring beispielsweise in einem Gehäuse festgelegt ist. Bei diesen Lagern handelt es sich beispielsweise um Kegelrollenlager, die in einer bekannten X- oder O-Anordnung oder in einer anderweitigen Anordnung angeordnet sind. Die erfindungsgemäße Lagerungseinrichtung ist aber bei jedweder Art von Wälzlagern anwendbar, die vorteilhafterweise spielfrei Axial- und Radialkräfte übertragen sollen. Dazu ist in der Regel eine Lagervorspannung nötig, die, wie beschrieben, durch die erfindungsgemäße Lagerungseinrichtung auf einfache Art und Weise gelöst ist.

Eine solche Lagervorspannung bewirkt eine optimale Ausnutzung der Lagertragfähigkeit in allen Betriebszuständen, eine Vermeidung von Lagerspiel und eines Verkippens der Welle sowie eine Kompensation von Wärmeausdehnungen.

Die nötige beziehungsweise gewünschte Lagervorspannung, also der Betrag der in axialer Richtung der Welle wirkenden Kraft, wird beispielsweise experimentell ermittelt und herkömmlich durch Distanzscheiben exakt eingestellt. Dabei orientiert sich der Betrag der Lagervorspannung an der höchsten, auftretenden Belastung. Dies verursacht eine zusätzliche Lagerbelastung und erhöht die drehmomentabhängige Lagerverlustleistung über dem gesamten Einsatzspektrum. Der Einsatz eines Stellglieds, beispielsweise in Form eines Aktuators, zur gezielten, drehmomentabhängigen Lagervorspannung reduziert im Teillastbereich die Vorspannung und verbessert den Wirkungsgrad, weist aber die bereits beschriebenen Nachteile auf.

Diese verbleibenden Nachteile eines solchen aktiven Stellglieds sowie die Nachteile der erhöhten Lagerverlustleistungen über dem gesamten Einsatzspektrum sind durch die erfindungsgemäße Lagerungseinrichtung überwunden.

Vorteilhafterweise sind das Steuerteil auf einer dem Lagerring zugewandten Stirnseite des Antriebsteils und das Betätigungsteil auf einer dem Antriebsteil zugewandten Stirnseite des Lagerrings angeordnet. Dies erlaubt eine gezielte und direkte Kraftübertragung sowie einen geringen Bauraumbedarf der erfindungsgemäßen Lagerungseinrichtung.

Weitere Vorteile, Merkmale und Einzelheiten der Erfindung ergeben sich aus der nachfolgenden Beschreibung eines bevorzugten Ausführungsbeispiels sowie anhand der Zeichnungen. Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnungen zeigen in:
- Fig. 1: eine perspektivische Ansicht einer Ausführungsform der erfindungsgemäßen Lagerungseinrichtung;
- Fig. 2: eine schematische Längsschnittansicht der Lagerungseinrichtung gemäß Fig. 1; und
- Fig. 3: zwei schematische Ansichten zur Verdeutlichung des Wirkprinzips der Lagerungseinrichtung gemäß den vorhergehenden Figuren.

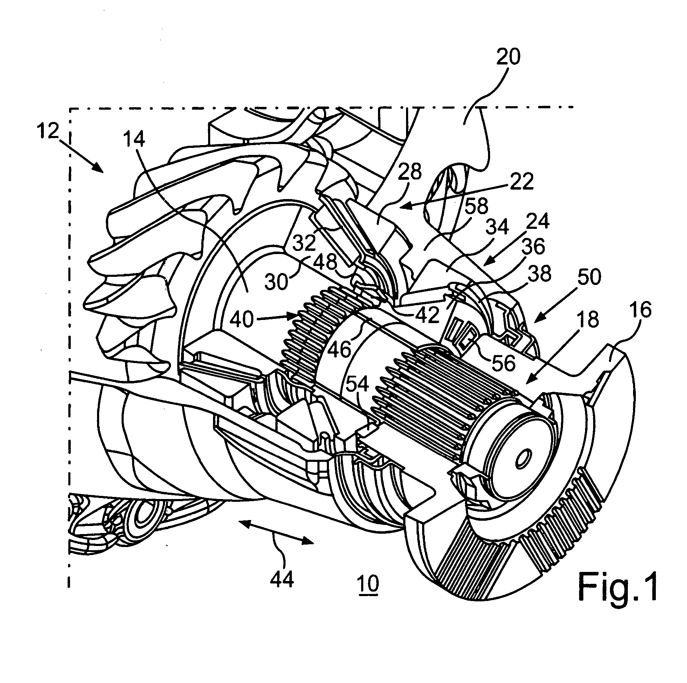

Die Fig. 1 zeigt eine Lagerungseinrichtung 10 für einen Antriebsstrang eines Nutzkraftwagens mit einer ein Antriebsritzel 12 aufweisenden Welle 14, die drehfest mit einem Antriebsteil in Form eines Kupplungsflansches 16 verbunden ist. Die drehfeste Verbindung der Welle 14 mit dem Kupplungsflansch 16 ist dabei über eine Verzahnung 18 realisiert, über welche beim Antrieb des Nutzkraftwagens von einer Verbrennungskraftmaschine ein Drehmoment von dem Kupplungsflansch 16 auf die Welle 14 übertragbar ist, welche dann wiederum über ihr Antriebsritzel 12 ein Hinterachsdifferentialgetriebe antreibt.

Die Welle 14 ist in einem ausschnittsweise dargestellten Gehäuse 20 über ein erstes Kegelrollenlager 22 sowie über ein zweites Kegelrollenlager 24 gelagert, wobei die Kegelrollenlager 22 und 24 in einer O-Anordnung angeordnet sind. Der Kupplungsflansch 16 sowie die Kegelrollenlager 22 und 24 sind dabei von einer Lagerungseinrichtung 10 umfasst.

Das Kegelrollenlager 22 umfasst einen Lageraußenring 28, der drehfest in dem Gehäuse 20 festgelegt ist, sowie einen mit der Welle 14 drehfest verbundenen Lagerinnenring 30. Der Lageraußenring 28 und der Lagerinnenring 30 sind unter Vermittlung von Wälzkörpern in Form von Kegelrollen aneinander abgestützt. Das Kegelrollenlager 22 umfasst weiterhin einen Käfig 32, der die Kegelrollen in Position hält.

Analog verhält es sich mit dem Kegelrollenlager 24, welches ebenso einen drehfest in dem Gehäuse 20 festgelegten Lageraußenring 34 sowie einen drehfest mit der Welle 14 verbundenen Lagerinnenring 36 und Wälzkörper in Form von Kegelrollen sowie einen Käfig 38 umfasst.

Ist der Lagerinnenring 30 des Kegelrollenlagers 22 beispielsweise durch einen Presssitz mit der Welle 14 drehfest verbunden, so ist die drehfeste Verbindung des Lagerinnenrings 36 des Kegelrollenlagers 24 mit der Welle 14 über eine Verzahnung 40 realisiert. Bei der Verzahnung 40 steht eine Verzahnung der Welle 14 in Eingriff mit einer korrespondierenden Verzahnung einer Zahnhülse 42, welche mit dem Lagerinnenring 36 drehfest verbunden, beispielsweise verschweißt, ist. Dies ermöglicht eine relative Verschiebung des Lagerinnenrings 36 zur Welle 14 in axialer Richtung der Welle 14 gemäß einem Richtungspfeil 44. In radialer Richtung der Welle 14 ist zwischen dem Lagerinnenring 36 und der Welle 14 eine Gleitbuchse 46 angeordnet, die die Reibung bei der relativen Verschiebung des Lagerinnenrings 36 zur Welle 14 auf ein Minimum reduziert und die Übertragung von Radialkräften des Lagerinnenrings 36 auf die Welle 14 ermöglicht.

In axialer Richtung der Welle 14 gemäß dem Richtungspfeil 44 zwischen dem Lagerinnenring 30 und dem Lagerinnenring 36 ist außerdem eine Stauchhülse 48 angeordnet, die einerseits an dem Lagerinnenring 30 und andererseits an dem Lagerinnenring 36 über entsprechende Anschläge abgestützt ist.

Bei der Lagerungseinrichtung 10 ist eine spielfreie Übertragung von Axialkräften, also von in axialer Richtung der Welle 14 gemäß dem Richtungspfeil 44 wirkenden Kräften, erwünscht, was eine Lagervorspannung der Lagerungseinrichtung 10 beziehungsweise der Kegelrollenlager 22 und 24 in axialer Richtung erfordert.

Dabei ist es wünschenswert, bei hohen, von der Verbrennungskraftmaschine zur Verfügung gestellten und über dem Kupplungsflansch 16 in die Welle 14 eingeleiteten Drehmomenten eine hohe Lagervorspannung, also einen hohen Betrag an axialer Kraft, bereitzustellen, während bei niedrigen und mittleren Drehmomenten eine reduzierte Lagervorspannung wünschenswert ist und sich positiv auf den Wirkungsgrad der Lagerungseinrichtung 10 auswirkt.

Zur Darstellung einer solchen, drehmomentabhängigen Lagervorspannung, also einer Verspannung des Lagerinnenrings 36 zum Lageraußenring 34 des Kegelrollenlagers 24, ist eine Verspanneinrichtung 50 vorgesehen, mittels welcher infolge einer relativen Verdrehung des Kupplungsflansches 16 zu dem Lagerinnenring 36 dieser Lagerinnenring 36 in axialer Richtung der Welle 14 gemäß dem Richtungspfeil 44 mit Kraft beaufschlagbar ist und somit relativ zu dem Lageraußenring 34 verspannbar ist, wodurch die besagte Lagervorspannung darstellbar ist.

Die relative Verdrehung des drehfest mit der Welle 14 verbundenen Kupplungsflansches 16 zu dem ebenfalls drehfest mit der Welle 14 verbundenen Lagerinnenring 36 erfolgt dabei dadurch, dass sich ein Bereich der Welle 14, in welche das Drehmoment über den Kupplungsflansch 16 eingeleitet wird aufgrund von Elastizitäten der Welle 14 relativ zu einem in Richtung des Momentenflusses stromab angeordneten Bereich der Welle 14 verdreht. Das bedeutet also, dass sich der Bereich der Welle 14, in welchem der Kupplungsflansch 16 mit der Welle verbunden ist, relativ zu dem Bereich, in welchem der Lagerring 36 angeordnet ist, verdreht, wobei diese relative Verdrehung in Abhängigkeit des Betrags des eingeleiteten Drehmoments erfolgt. Bei hohen Drehmomenten erfolgt somit eine hohe relative Verdrehung. Bei niedrigen Drehmomenten erfolgt eine weniger starke bis gar keine relative Verdrehung.

Diese relative Verdrehung um die Drehachse der Welle 14 ist nun derart in eine Bewegung des Lagerinnenrings 36 beziehungsweise in eine Beaufschlagung dieses mit einer Kraft in axialer Richtung der Welle 14 dargestellt, dass die Verspanneinrichtung 50 ein dem Kupplungsflansch 16 zugeordnetes, mit diesem einstückig ausgebildetes und im Wesentlichen rampenförmiges Steuerteil 52 sowie ein korrespondierendes, dem Lagerinnenring 36 zugeordnetes, mit diesem einstückig ausgebildetes sowie ebenfalls im Wesentlichen rampenförmiges Betätigungsteil 54 aufweist, welche unter Vermittlung von jeweiligen Zylinderrollen 56 zusammenwirken.

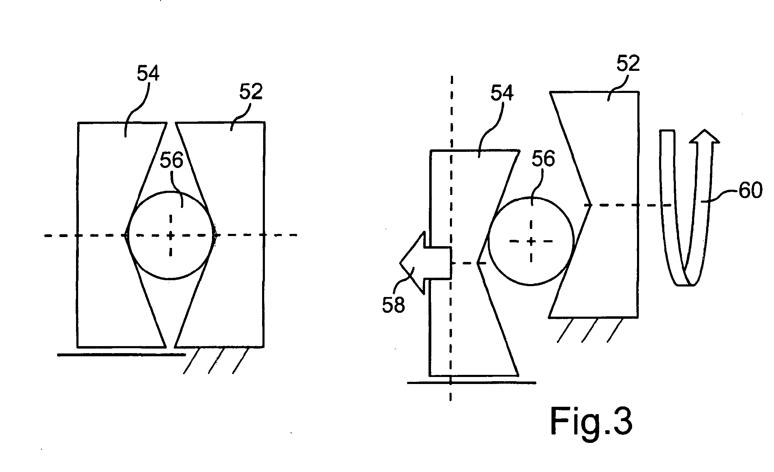

Das Steuerteil 52 ist dabei auf einer dem Lagerinnenring 36 zugewandten Stirnseite des Kupplungsflansches 16 angeordnet, während das Betätigungsteil 54 auf einer dem Kupplungsflansch 16 zugeordneten Stirnseite des Lagerinnenrings 36 angeordnet ist. In Zusammenschau mit Fig. 3 wird deutlich, dass bei einer relativen Verdrehung des Kupplungsflansches 16 und damit des Steuerteils 52 relativ zu dem Lagerinnenring 36 und damit zu dem Betätigungsteil 54 die Zylinderrolle 56 relativ an rampenförmigen Flanken des Steuerteils 52 und des Betätigungsteils 54 entlang rollt und somit das Steuerteil 52 und das Betätigungsteil 54 auseinander bewegt. Da nun das Steuerteil 52 über den Kupplungsflansch 16 in axialer Richtung der Welle 14 abgestützt ist, und auch der Lagerinnenring 36 über die Kegelrollen und den Lageraußenring 34 an einer entsprechenden Schulter 58 des Gehäuses 20 in axialer Richtung der Welle 14 abgestützt ist, kommt es zu einer Kraft in axialer Richtung der Welle 14, welche aus dieser Verspannung resultiert.

Der Betrag dieser Verspannung und damit der Betrag dieser axialen Kraft, welche die Lagervorspannung darstellt, hängt dabei davon ab, wie weit die Zylinderrolle 56 an den entsprechenden Flanken des rampenförmigen Steuerteils 52 beziehungsweise Betätigungsteils 54 entlang wandert, was wiederum von dem Betrag der relativen Verdrehung des Kupplungsflansches 16 zu dem Lagerinnenring 36 abhängt. Dies wiederum hängt ab von dem Betrag des eingeleiteten Drehmoments. Je höher das Drehmoment, desto höher ist die relative Bewegung der Zylinderrolle 56 zu den rampenförmigen Flanken und desto höher ist die Lagervorspannung. Das bedeutet, dass aus sehr hohen Drehmomenten sehr hohe Lagervorspannungen resultieren. Reduziert sich das Drehmoment, so reduziert sich auch die relative Verdrehung zwischen dem Kupplungsflansch und dem Lagerinnenring 36 und somit auch die Lagervorspannung.

Die Ausbildung der axialen Kraft, welche durch einen Richtungspfeil 59 angedeutet ist, wobei die relative Verdrehung des Kupplungsflansches 16 zu dem Lagerinnenring 36 durch einen Richtungspfeil 60 angedeutet ist, wird dadurch begünstigt, dass die axiale Verschiebung des Lagerinnenrings 36 relativ zur Welle durch die beschriebene Gleitbuchse 46 begünstigt ist, wodurch die auf den Lagerinnenring 36 aufgebrachte Kraft zumindest nahezu vollständig in die Lagervorspannung fließen kann. Wie erwähnt erlaubt auch die Verzahnung 40 diese relative Verschiebung des Lagerinnenrings 36 zur Welle 14.

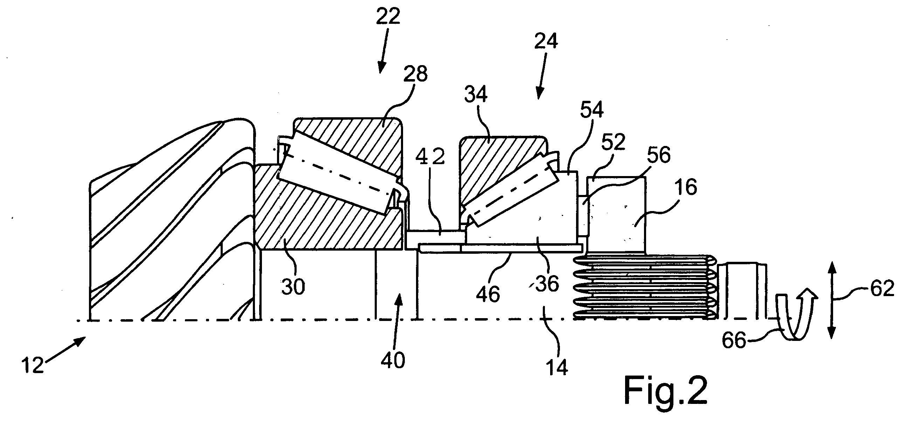

Die Fig. 2 stellt diesen Sachverhalt schematisch nochmals dar. Die Zylinderrolle 56 verläuft dabei ebenso wie die jeweilige Rampenform des Steuerteils 52 beziehungsweise des Betätigungsteils 54 zumindest im Wesentlichen parallel zur radialen Richtung der Welle 14 gemäß einem Richtungspfeil 62. An dieser Stelle sei angemerkt, dass selbstverständlich eine Mehrzahl von Zylinderrollen 56 vorgesehen sein kann beziehungsweise vorgesehen ist, die durch einen entsprechenden Käfig in Position gehalten und in Umfangsrichtung der Welle 14 verteilt angeordnet sind. Einer jeden solchen Zylinderrolle 56 ist dabei ein entsprechendes Steuerteil 52 beziehungsweise Betätigungsteil 54 zugeordnet. Die Steigung der Flanken der jeweiligen Rampenform bestimmt dabei den Betrag der Kraft in axialer Richtung, also die Lagervorspannung in Abhängigkeit von dem Betrag der relativen Verdrehung des Kupplungsflansches 16 zu dem Lagerinnenring 36. Ein Richtungspfeil 66 in der Fig. 2 deutet dabei die Drehung der Welle 14 sowie die Einleitung des besagten Drehmoments über den Kupplungsflansch 16 in die Welle 14 an.

## Patentansprüche

1. Lagerungseinrichtung (10) für einen Antriebsstrang eines Kraftwagens, mit zumindest einer Welle (14), mit einem mit der Welle (14) drehfest verbundenen Antriebsteil (16), mit zumindest einem Lagerring (36) der Welle (14) und mit einer Verspanneinrichtung (50) zur Beaufschlagung des Lagerrings (36) in axialer Richtung (44) der Welle mit einer Kraft,
**dadurch gekennzeichnet, dass**
der Lagerring (36) mittels der Verspanneinrichtung (50) infolge einer relativen Verdrehung des Antriebsteils (16) zu dem Lagerring (36) mit der Kraft in axialer Richtung (44) der Welle (14) beaufschlagbar ist, wobei der Lagerring (36) zumindest bereichsweise auf der Welle (14) angeordnet und drehfest mit dieser verbunden ist.

2. Lagerungseinrichtung (10) nach Anspruch 1,
**dadurch gekennzeichnet, dass**
die Verspanneinrichtung (50) wenigstens ein dem Antriebsteil (16) zugeordnetes und zumindest bereichsweise zumindest im Wesentlichen rampenförmiges Steuerteil (52) sowie wenigstens ein korrespondierendes, dem Lagerring (36) zugeordnetes und zumindest bereichsweise zumindest im Wesentlichen rampenförmiges Betätigungsteil (54) aufweist, welche unter Vermittlung zumindest eines Vermittlungsteils (56), insbesondere eines Wälzkörpers (56), zusammenwirken.

3. Lagerungseinrichtung (10) nach Anspruch 2,
**dadurch gekennzeichnet, dass**
der Wälzkörper (56) als Zylinderrolle (56) ausgebildet ist.

4. Lagerungseinrichtung (10) nach einem der Ansprüche 2 oder 3,
**dadurch gekennzeichnet, dass**
das Steuerteil (52) auf einer dem Lagerring (36) zugewandten Stirnseite des Antriebsteils (16) angeordnet ist.

5. Lagerungseinrichtung (10) nach einem der Ansprüche 2 bis 4,
**dadurch gekennzeichnet, dass**
das Betätigungsteil (54) auf einer dem Antriebsteil (16) zugewandten Stirnseite des Lagerrings (36) angeordnet ist.

6. Lagerungseinrichtung (10) nach einem der Ansprüche 2 bis 5,
**dadurch gekennzeichnet, dass**
die jeweilige Rampenform zumindest im Wesentlichen parallel zur radialen Richtung (62) der Welle (14) ausgebildet ist.

7. Lagerungseinrichtung (10) nach einem der vorhergehenden Ansprüche,
**dadurch gekennzeichnet, dass**
der Lagerring (36) über eine Verzahnung (40) drehfest mit der Welle (14) verbunden ist.

8. Lagerungseinrichtung (10) nach einem der vorhergehenden Ansprüche,
**dadurch gekennzeichnet, dass**
der Lagerring (36) in axialer Richtung (44) der Welle (14) relativ zu dieser verschiebbar ist.

9. Lagerungseinrichtung (10) nach einem der vorhergehenden Ansprüche,
**dadurch gekennzeichnet, dass**
in radialer Richtung (62) der Welle (14) zwischen dieser und dem Lagerring (36) ein Gleitelement (46), insbesondere eine Gleitbuchse (46), angeordnet ist.

## Claims

1. Mounting device (10) for a drive train of a motor vehicle, having at least one shaft (14), a drive part (16) connected to the shaft (14) for rotation therewith, at least one bearing ring (36) of the shaft (14) and a tensioning means (50) for applying a force to the bearing ring (36) in the axial direction (44) of the shaft,
**characterised in that**
the force can be applied to the bearing ring (36) in the axial direction (44) of the shaft (14) by means of the tensioning means (50) due to a relative rotation of the drive part (16) with respect to the bearing ring (36), wherein the bearing ring (36) is arranged at least partially on the shaft (14) and connected to rotate therewith.

2. Mounting device (10) according to claim 1,
**characterised in that**
the tensioning means (50) has at least one control part (52) assigned to the drive part (16) and at least partially at least substantially in the form of a ramp, and at least one corresponding actuating part (54) assigned to the bearing ring (36) and at least partially at least substantially in the form of a ramp, said parts cooperating through the intermediary of an intermediate part (56), in particular a rolling body (56).

3. Mounting device (10) according to claim 2,
**characterised in that**
the rolling body (56) is formed as a cylinder roller (56).

4. Mounting device (10) according to one of the claims 2 or 3,
**characterised in that**
the control part (52) is arranged on an end face of the drive part (16) facing the bearing ring (36).

5. Mounting device (10) according to one of the claims 2 to 4,
**characterised in that**
the actuating part (54) is arranged on an end face of the bearing ring (36) facing the drive part (16).

6. Mounting device (10) according to one of the claims 2 to 5,
**characterised in that**
the respective ramp form is configured at least substantially parallel to the radial direction (62) of the shaft (14).

7. Mounting device (10) according to one of the preceding claims,
**characterised in that**
the bearing ring (36) is rotatably connected by means of a toothed area (40) to the shaft (14).

8. Mounting device (10) according to one of the preceding claims,
**characterised in that**
the bearing ring (36) can be displaced in the axial direction (44) of the shaft (14) relative thereto.

9. Mounting device (10) according to one of the preceding claims,
**characterised in that**
a slide element (46), in particular a slide bushing (46), is arranged in the radial direction (62) of the shaft (14) between said shaft (14) and the bearing ring (36).

## Revendications

1. Système de paliers (10) pour une chaîne cinématique d'une automobile, comprenant au moins un arbre (14), une pièce d'entraînement (16) accouplée solidaire en rotation à l'arbre (14) et au moins une bague de palier (36) de l'arbre (14) qui peut être soumise à une force dans le sens axial (44) de l'arbre au moyen d'un dispositif de contrainte (50), **caractérisé en ce que** la bague de palier (36) peut être soumise à ladite force dans le sens axial (44) de l'arbre (14) au moyen du dispositif de contrainte (50) par torsion relative de la pièce d'entraînement (16) par rapport à la bague de palier (36).

2. Système de paliers (10) selon la revendication 1, **caractérisé en ce que** le dispositif de contrainte (50) présente au moins une pièce de commande (52) au moins à certains endroits en forme de rampe et associé à la pièce d'entraînement (16) ainsi qu'au moins une pièce d'actionnement (54) correspondante au moins à certains endroits en forme de rampe et associée à la bague de palier (36), lesquelles agissent ensemble par l'intermédiaire d'au moins une pièce de transmission (56), en particulier un corps roulant (56).

3. Système de paliers (10), selon la revendication 2, **caractérisé en ce que** le corps roulant (56) est conçu comme un rouleau cylindrique (56).

4. Système de paliers (10) selon l'une quelconque des revendications 2 ou 3, **caractérisé en ce que** la pièce de commande (52) est disposée sur une face avant de la pièce d'entraînement (16) orientée vers la bague de palier (36).

5. Système de paliers (10) selon l'une quelconque des revendications 2 ou 4, **caractérisé en ce que** la pièce de commande (54) est disposée sur une face avant de la pièce d'entraînement (16) orientée vers la bague de palier (36).

6. Système de paliers (10), selon l'une quelconque des revendications 2 à 5, **caractérisé en ce que** chaque forme de rampe est conçue au moins essentiellement parallèle à le sens radial (62) de l'arbre.

7. Système de paliers (10) selon l'une quelconque des revendications précédentes, **caractérisé en ce que** la bague de palier (36) est reliée solidaire en rotation à l'arbre (14) par une denture (40).

8. Système de paliers (10) selon l'une quelconque des revendications précédentes, **caractérisé en ce que** la bague de palier (36) peut être déplacée dans le sens axial (44) de l'arbre (14) par rapport à celui-ci.

9. Système de paliers (10) selon l'une quelconque des revendications précédentes, **caractérisé en ce que** dans le sens radial (62) de l'arbre (14) entre ledit arbre et la bague de palier (36) est disposé un élément de guidage (46), en particulier une douille de guidage (46).
